# EUROPEAN PATENT SPECIFICATION

(11) **EP 3 802 052 B1**
(45) Date of publication and mention of the grant of the patent: **31.07.2024**
(21) Application number: 19736499.5
(22) Date of filing: 23.05.2019
(51) Int. Cl.: B29C 45/44, B29C 33/44, B62J 1/00, B29C 45/40, B29L 31/30

(54) **MOLD FOR A SUPPORT ELEMENT, FOR EXAMPLE A SADDLE FOR VEHICLES, AND SUPPORT ELEMENT OBTAINABLE WITH SUCH A MOLD**
FORM FÜR EIN STÜTZELEMENT, Z.B. EINEN SATTEL FÜR FAHRZEUGE, UND MIT EINER SOLCHEN FORM ERHÄLTLICHES STÜTZELEMENT
MOULE POUR UN ÉLÉMENT DE SUPPORT, PAR EXEMPLE UNE SELLE POUR VÉHICULES, ET ÉLÉMENT DE SUPPORT POUVANT ÊTRE OBTENU AVEC UN TEL MOULE

(30) Priority: 31.05.2018 IT 201800005920
(43) Date of publication of application: 14.04.2021
(60) Divisional application: 22155532.9
(73) Proprietor: Selle Royal Group S.p.A., 36050 Pozzoleone (VI) (IT)
(72) Inventor: BIGOLIN, Barbara, 36050 Pozzoleone (Vicenza) (IT); MALFATTI, Marco, 36050 Pozzoleone (Vicenza) (IT)
(74) Representative: Feltrinelli, Secondo Andrea
(86) International application number: PCT/IB2019/054270
(87) International publication number: WO 2019/229596

(56) References cited:
- EP-A2- 2 085 302
- DE-A1- 102015 111 537
- GB-A- 2 224 248
- US-A1- 2017 246 770
- US-A1- 2017 246 771

## Description

### TECHNICAL FIELD OF THE INVENTION

The present invention relates to a mold for a support element for the human body, such as for example a saddle for vehicles, in particular a saddle for bicycles or motorcycles, a seat, a grip, a handle, an armrest, a backrest, a headrest or an equipment for sport and leisure, as well as a support element for the human body obtainable with this mold.

### TECHNICAL BACKGROUND

In the modern era, bicycle saddles include seats with numerous conformations, able to adapt to the different anatomy of the user, as well as equipped with comfort elements, able to guarantee a certain comfort to the same user, also on the basis of the specific use for which the bicycle saddle is intended.

Generally speaking, bicycle saddles are composed of the following elements:
- a covering, which can be made of different materials, from leather to synthetic materials, and which can have different aesthetic variations;
- a padding, covered by the covering, which can be of different nature but generally presents itself in the form of a foamed material, particularly in polyurethane, which can be formulated according to different ratios of its components in order to offer different stiffness and/or elasticity features. The padding can be glued or directly foamed on an underlying support structure;
- a base or support structure, in jargon called shell, mainly made of an injected plastic material, i.e. a thermoplastic material possibly mixed with other materials or fillers (such as glass, carbon, natural fibre fillers, etc.) during the injection phase. Moreover, the shell can comprise inserts of different materials (for example rubber or fibres or composite materials) made by co-molding or over-injection processes and positioned in specific areas (such as the anatomical/genital, ischial, side flexing favouring pedalling areas, etc.), for example to allow greater comfort performance in the same areas. The support structure is therefore adapted to offer the adequate support and dynamism performance to the saddle itself, as well as to define the aesthetic and comfort lines of the resulting saddle;
- a metal structure, in jargon called a "fork", with or without spring elements, which, in addition to supporting the other components of the saddle, guarantees - through the two substantially parallel areas or bars of its central part - the possibility of attaching the same saddle to a seat post and, therefore, to the bicycle frame.

As is known, over the course of time many support elements have been proposed, in particular vehicle saddles, but in most cases, they can be obtained by complicated manufacturing processes, using relatively expensive and often non-ecological molds and procedures. Document US 2017/246770 discloses a mold wherein said mold comprises a portion, lower during use, said lower portion comprising a cavity , adapted for molding a base component, wherein said mold comprises an extraction system comprising movable rods , adapted during use to release and/or lift and/or make the molded base component exit from said mold and/or from said lower portion , and further movable rods , during use adapted to make an undercut and/or holes in said base component and/or in a lower surface thereof.

### OBJECTS OF THE INVENTION

An object of the present invention is to provide a new mold for a support element or a saddle for vehicles, in particular for bicycles, or for a component thereof.

Another object of the present invention is to provide a mold which is capable of making a support element or a saddle for vehicles, in particular for bicycles, or one of their components, easily.

Another object of the present invention is to provide a mold which does not entail high storage costs for the product obtained from the mold itself.

According to one aspect of the invention, a mold for a base component of a support element or a saddle according to claim 1 are provided.

An object of the present invention is to provide a new support element or a new saddle for vehicles, in particular for bicycles, or a component thereof.

Another object of the present invention is to provide a support element or a saddle or a component thereof which can be produced easily.

Another object of the present invention is to provide a support element or a saddle that can be obtained with a process easy to be carried out, by means of equally practical molds.

Another object of the present invention is to provide a support element or a saddle or a component thereof which can be adapted or "customized".

The dependent claims refer to preferred and advantageous examples of embodiments of the invention.

### BRIEF DESCRIPTION OF THE DRAWINGS

Other features and advantages of the invention will be more apparent from the description of an exemplary embodiment of a support element, such as a saddle, or a component thereof, illustrated by way of example in the accompanying drawings, wherein:
figure 1 is a perspective view, slightly from the top and exploded of a support element, such as a saddle, according to the present invention;
figure 2 is a perspective view of a closed mold according to the present invention;
figure 3 is a rear view of the mold of figure 2,
figure 4 is a side view of the mold of figure 2 and 3;
figure 5 is a perspective view of a component of the mold of figures 2-4;
figure 6 is a perspective view of another component of the mold of figures 2-4;

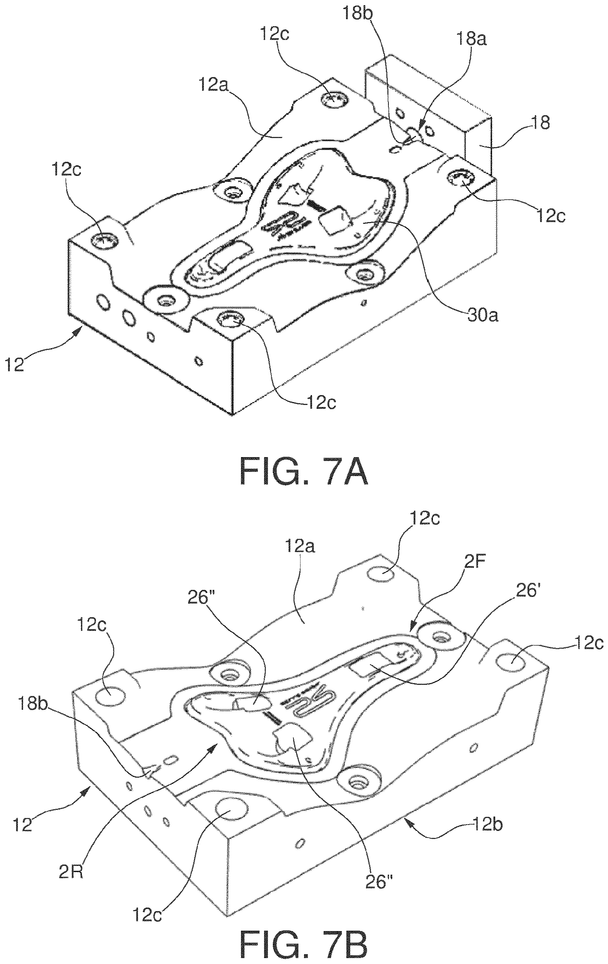

figures 7A and 7B are further perspective views, respectively from the front part and from the rear part, of the other component of figure 6,
figure 8 is a top view of the mold of figures 2-4 slightly in transparency,
figure 9A is a perspective view of the base component, as soon as the molding step is completed,
figure 9B is a perspective view of the finished base component of figure 9A,
figure 10A is a side view of the mold of figures 2-4 slightly in transparency,
figure 10B is a side view of parts of the mold of figures 2-4;
figures 11 and 12 are respectively perspective and side views of part of the mold of figures 2-4 and of the molded base component, in an open configuration of the mold and with the base component released therefrom,

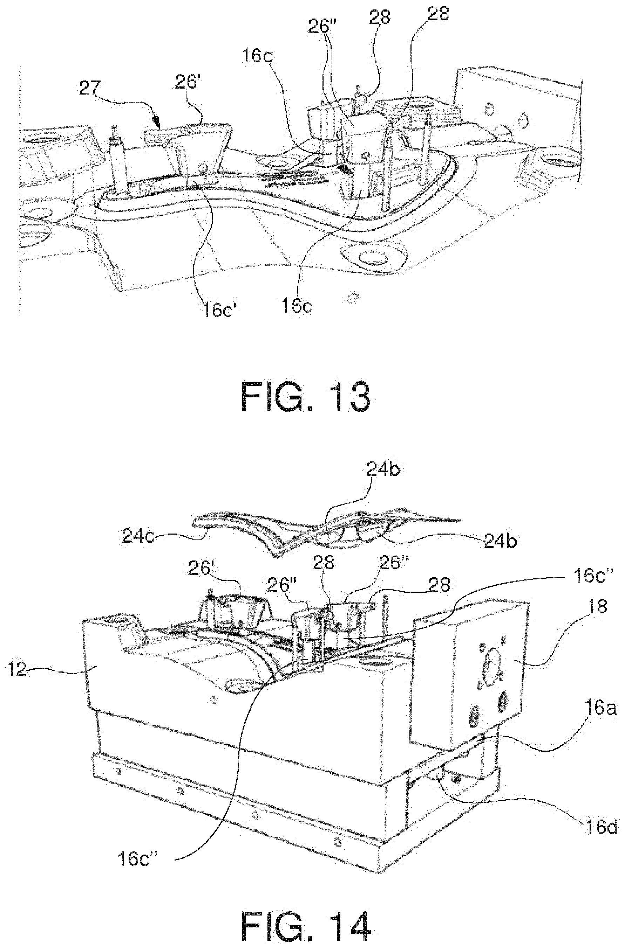

figure 13 is an enlarged detail of the view of figure 11,
figure 14 is a perspective view from the rear of the mold and of the base component of figures 11 and 12.

In the accompanying drawings, identical parts or components are distinguished by the same reference numerals.

### EXEMPLARY EMBODIMENTS OF THE INVENTION

The present invention will be described with particular reference to a saddle for vehicles, for example for bicycles or motorcycles, but it will be understood that the same features, described with reference to a saddle, are to be considered also with reference to other support elements, for example support elements for the human body, all falling within the scope of protection of the present patent application, for example a seat, a grip, a handle, an armrest, a backrest, a headrest, an equipment for sport and leisure.

In particular, the present invention relates to a mold for the realization of such support for the human body or for such saddle for vehicles, for example for bicycles or motorcycles, or of a component thereof.

With reference to the attached figures, with an illustrative and not limiting aim, a saddle for vehicles has been generally indicated with reference numeral 1.

This saddle 1 comprises a base component 2 (or shell), designed to be constrained for example to the frame of a vehicle such as a bicycle or a motorcycle, possibly through the interposition of a seat post (not shown in the figures), a padding component 3, arranged on the base component 2, and a cover element (or covering) 4, placed around and covering the padding component 3.

In the present description, the term base component 2 means the so-called shell of a saddle or another rigid component present and/or associable in the support component according to the present invention.

The base component 2 comprises an upper surface 2a, as well as a lower surface 2b, while the padding component 3 comprises an upper surface 3a and a lower surface 3b intended to come into contact and/or be constrained to the upper surface 2a of the base component 2.

In the present discussion, the terms upper and lower, front or frontal and rear (or similar), unless the contrary is explicitly indicated, are to be intended according to the arrangement of a saddle in use on a frame of a vehicle, such as a bicycle or a motorcycle.

Likewise, the terms upward or vertical or horizontal are to be considered, unless the contrary is explicitly indicated, according to the arrangement of a saddle in use on a frame of a vehicle, such as a bicycle or a motorcycle.

A peculiarity of the present invention consists in the fact that the base component 2 is made of polyurethane or of a polyurethane material.

In the course of the present discussion, the term polyurethane (or polyurethane material) refers to both polyurethane as such, and a polyurethane-based compound or a polyurethane mixture, unless the contrary is explicitly indicated.

The polyurethane of the base component 2, according to at least one version of the present invention, is obtained from the reaction between a polyisocyanate (such as for example of toluene diisocyanate, methylene diisocyanate origin or modified isocyanate variants thereof) and a polyol composition with base of polyether and/or polyester containing cross-linking agents, catalysts and, possibly, a predefined percentage of mineral and/or natural fillers.

Unlike the thermoplastic material usually used for making conventional shells, the technique according to the present invention provides a cross-linking reaction inside the mold 10 which gives the polymeric matrix (which will constitute the base component 2) greater stability and stiffness.

Therefore, according to the present invention (or at least one version thereof) the base component 2 or shell (or other component) is obtained by a casting or injection process and not by thermoplastic injection.

The resulting product is a compact polyurethane composite. Given the versatility of the system, it is possible to introduce a predefined quantity of fillers (such as, only for example: glass fibres, carbon fibres, natural fibres) to enhance certain mechanical features thereof, for example impact resistance at low temperatures and/or shock resistance.

Among the advantages offered by the present invention, the simplification of production equipment can also be mentioned, thanks to the use of aluminium molds, which favours rapid production cycles.

Considering a version of the chemical process according to the present invention, the components of the polyurethane or of the polyurethane material meet in a mixing head where they are mixed together. The polyol/isocyanate mixing ratio is chosen according to the isocyanate/polyol compositions and the filler to be used, as well as on the basis of the results to be obtained.

In a version of the invention, the base component 2 is made at least partly of polyurethane while in another version of the present invention, the base component 2 is made entirely of polyurethane.

In a version of the invention, the polyurethane material constituting the base component 2 is rigid, since this component is designed to support the weight of the user, as well as to determine a stable and resistant constraint with the vehicle frame.

The padding component 3, in comparison, is softer or less rigid than the base component 2, since its purpose is not support but comfort.

If desired, also the padding component 3 is entirely made of polyurethane. Alternatively, the padding component 3 can be made mainly of expanded foam, if desired a polyurethane foam, and possibly may include inserts or portions made of other materials.

The inserts can, for example, be made of a thermoplastic material.

In a version of the invention, the padding component 3 could be made of an ethylene-vinyl acetate (EVA), for example by thermoforming.

According to a particular version of the invention, possible inserts present in the padding component 3 can also be made of a polyurethane material, such as for example a foam having a different rigidity or hardness or density with respect to the polyurethane foam which makes up most of the padding component 3 (for example a less rigid or less dense foam, in order to increase comfort in the areas affected by the insert itself), or in a polyurethane gel.

Between the base component 2 and the frame, for example the frame of a vehicle, such as a bicycle, a so-called "fork" component or fork 5 could also be interposed, usually comprising a U-shaped component formed by a pair of round bars or prongs connected to one end.

More particularly, the fork 5 can have a pair of prongs 5a, each having, in use, a rear end 5b, as well as, in use, a front end 5c, such ends 5b and 5c being constrained to the base component 2, for example engaged in respective seats 24. Moreover, if desired, the front ends 5c of the prongs are joined as a bridge by means of a U-shaped connection portion.

Alternatively, the base component 2 could be a rigid shell without a connection fork to the seat post, capable of being directly connected to the seat post, or a shell with integrated seat post tube, or yet with an annular fork, e.g. that commercially termed "moebius".

In a version of the invention, the cover element (or covering) 4 is made entirely of polyurethane. Alternatively, it can be made of silicone or PVC (poly-vinylchloride) or leather or fabric or a combination of the aforementioned materials.

In a version of the invention, the cover element 4 and the padding component 3 are made of the same material. For example, if the padding component 3 is made of a self-skinning polyurethane foam, the cover element 4 is made from the external surface of this foam, which - by hardening and/or thickening - creates this sort of coating which is harder and/or thicker and resistant with respect to the "body" of the padding component itself. This result is obtained automatically following the foaming process of the self-skinning polyurethane foam.

In a version of the invention, all the components 2, 3 and 4 of the saddle 1 are made entirely of polyurethane or of polyurethane material

The present invention also relates to a mold 10 for making the base component 2. Specifically, the mold 10 is composed of a lower portion 12 and an upper portion 14.

In a version of the invention, the lower portion 12 constitutes a lower half-mold (also called matrix) while the upper portion 14 constitutes an upper half-mold (also called punch).

Considering that the lower portion 12 is fixed, the upper portion 14 is movable, in the sense that it can be moved away from the lower portion 12 and/or moved toward it in a reversible manner. In particular, the upper portion 14 can be moved away from the lower portion 12, for example at the end of the process, to allow the molded piece to come out, in this case of the molded base component 2, or even possibly in intermediate steps of the molding process.

The mold 10 according to the present invention further comprises an extraction system 16. The extraction system 16 is suitable, for example at the end of the process, to release the molded base component 2 from the mold 10 and to obtain the necessary undercuts, as will be better described in the following of the present discussion.

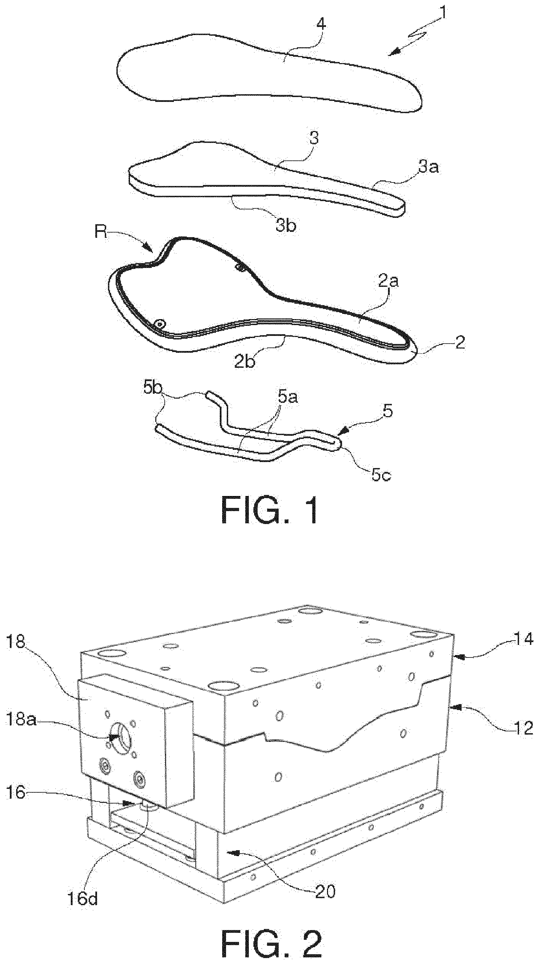

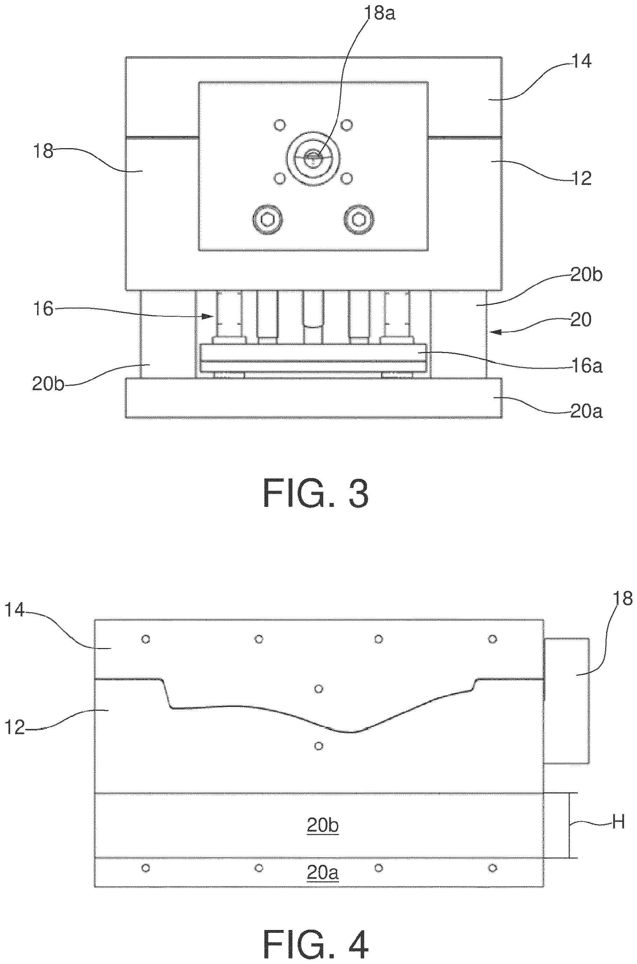

As can be seen in figures 2-5, the mold 10 can be provided in a first operating phase, or closed operating phase, in which the upper portion 14 is in contact with the lower portion 12, causing closure of the mold 10.

Alternatively, the mold 10 (in a version not shown) can also be used in a version in which the upper portion 14 is not in contact with the lower portion 12, thus maintaining the mold 10 in an open configuration.

Optionally, means can be provided for maintaining the mold in the closed or open position, which are known in the field.

The mold 10 has a cavity 30 for molding the base component 2.

In a version of the invention, for example in the first operating phase with the mold 10 in the closed configuration, the upper portion 14 and the lower portion 12 determine, inside them, a cavity 30.

The cavity 30 has a conformation corresponding (in negative) to that of the base component 2 of the support element for the human body or saddle 1.

The mold 10 further comprises an insertion unit 18. The insertion unit 18 comprises a hole 18a, capable of placing the cavity 30 in fluid communication with an insertion system of known type.

The hole 18a is a through hole. Moreover, in a version of the invention, the hole 18a has an extension parallel to the plane on which the mold 10 lies.

The insertion unit 18, in a version of the invention, is fixed or constrained in a stable manner to the lower portion 12 of the mold 10, in particular to a side wall thereof. The insertion unit 18 is positioned so as not to hinder the movement of the upper portion 14 of the mold 10.

In a version of the invention, the lower portion 12 of the mold 10, in correspondence with the hole 18a, has a pilot channel 18b, capable of conveying the material in the fluid or liquid state that comes from the insertion system towards the cavity 30.

The mold 10 further comprises a supporting platform 20, consisting of a support base 20a and, possibly, of support walls 20b. The supporting platform 20 is placed below the lower portion 12 of the mold 10.

In a version of the invention, a free space is enclosed between the support base 20a and the support walls 20b. This free space at least partially houses this extraction system 16.

The support base 20a can have a parallelepiped conformation with a substantially rectangular or square base, which determines the plane on which the mold 10 lies. This plane is substantially parallel, in at least one version of the invention, to the ground.

In a version of the invention, the support walls 20b are placed on the two opposite or parallel sides of the support base 20a and have a determined height H.

In at least one version of the invention, the insertion unit 18 allows the insertion of the material able to make the base component 2, such as for example polyurethane, through an insertion parallel to the plane on which the mold 10 lies, for example by a shaped cylindrical seat that houses the injector of the injection device.

The injected material is naturally in the liquid or fluid state or in any case an injectable material.

The extraction system 16 comprises movable rods 16b and further movable rods 16c, possibly moved by an extraction plate 16a.

The extraction system 16 allows, once the mold 10 is in an open configuration, to detach and release the base component 2 molded by the mold 10 and, thanks to the conformation according to the present invention, to obtain the necessary undercuts and/or holes.

The movable rods 16b and/or the further movable rods 16c comprise rods (possibly having a substantially cylindrical section and/or a single body substantially rigid and/or not deformable during its movement) which, as they move, determine the lifting of the molded base component 2.

In particular, the rods 16b and/or 16c move upwards (considering the mold in use), raised by the extraction plate 16a and/or by means of alternative systems. The extraction plate 16a, when present, is placed under the lower portion 12 of the mold 10.

The rods 16b move along a vertical direction, substantially perpendicular to the plane on which the mold 10 lies.

The further movable rods 16c have a shaped proximal end 26 (facing the cavity 30 and therefore towards the lower surface 2b of the base component 2 to be molded).

The shaped proximal end 26 allows to create the necessary undercuts and/or holes of the base component 2, suitable for determining a specific conformation of the base component 2 (for example of its lower surface 2b), for example suitable for determining the connection with the fork 5 of the saddle 1.

In a version of the invention, at least one of the further movable rods 16c extends along a direction tilted with respect to the vertical direction along which the movable rods 16b extend and/or tilted with respect to the plane on which the mold 10 lies.

In particular, the at least one further movable rod 16c is tilted towards the interior of the mold 10 and/or towards at least one of the movable rods 16b.

Thanks to the present invention, therefore, by means of a mold which generally has, in at least one version of the invention, a structure similar to that of traditional molds, it is possible to obtain a molded component (such as the base component 2) provided with holes and/or undercut surfaces. These holes and/or undercut surfaces, in fact, will be released from the mold 10 and/or from the lower portion 12 by means of said at least one tilted further movable rod 16c which, thanks to its shaped proximal end 26, during the molding step, will act as a template for the parts of the base component 2 to be made with undercuts and/or perforated, while subsequently, it will be able to "free" or release the molded component.

The movable rods 16b and/or the further movable rods 16c can be constrained, connected and/or hooked, through their distal ends, to the extraction plate 16a, if present.

The extraction plate 16a possibly moves upward along a substantially vertical direction, that is to say along a direction substantially perpendicular to the plane on which the mold 10 lies.

The extraction plate 16a, and in general the components of the mold 10 which are movable, according to a version of the invention, can move thanks to automated means able to generate their movement, for example by means of electric impulses or by means of pistons or pneumatic means, etc.

In a version of the invention, the movement of the plate 16a, and therefore of the molded piece, occurs after the upper portion 14 of the mold 10 is released from the lower portion 12, for example completely released from the latter.

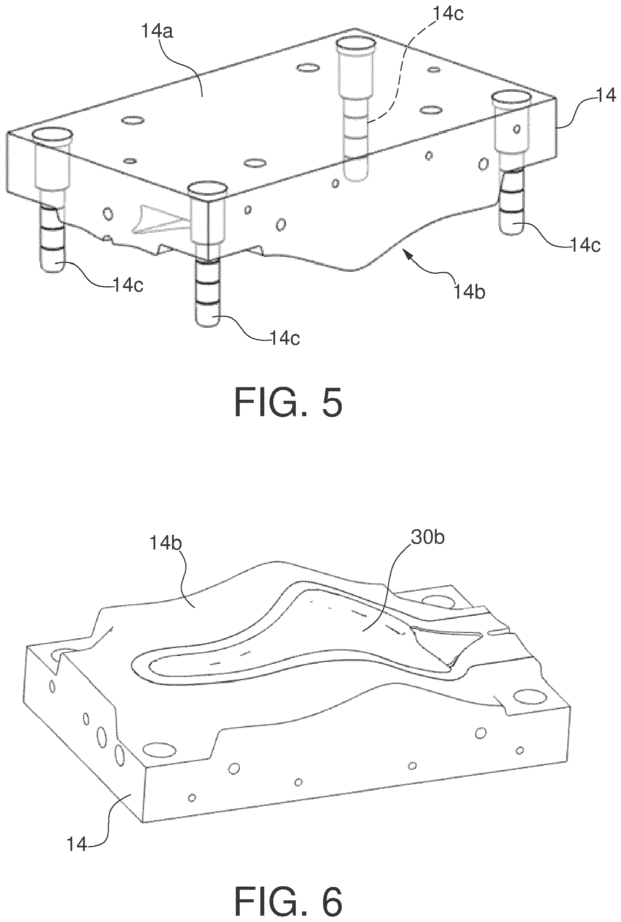

According to a variant shown in the figures, for example in figure 6, the upper portion 14 has an external surface 14a and an internal surface 14b.

The external surface 14a is substantially parallel to the plane on which the mold 10 lies.

The internal surface 14b, opposite and substantially parallel to the external surface 14a, is oriented towards the interior of the mold 10.

The internal surface 14b has, substantially in its central portion, a recessed area which determines, in at least one version of the invention, the upper wall 30b of the cavity 30.

This upper wall 30b of the cavity 30 reproduces, in negative, the upper surface 2a of the base component 2.

The upper portion 14 of the mold 10 can have - for example in angular or apical positions thereof - pin means 14c adapted to be engaged, in a reversible and/or slidable manner, with the lower portion 12 of the mold 10.

For example, in the version shown in figure 6, the upper portion 14 has an overall conformation substantially parallelepiped with a rectangular or square base and the pin means 14c extend downwards, vertically, from the four corners or edges of the internal surface 14b of the same.

In the same way, the lower portion 12 can have an upper face 12a and housing means 12c able to house the pin means 14c of the upper portion 14. The housing means 12c are for example configured as an opening having a length corresponding to that of the pin means 14c and a section slightly larger than that of the latter, so as to allow them to be housed.

The position of the pin means 14c and of the housing means 12c can be reversed, or different, without thereby departing from the scope of protection of the present invention, since the pin means 14c and the housing means 12c simply have the function to reversibly constrain and release the upper portion 14 and the lower portion 12 of the mold 10, being able to be replaced by similar elements.

The upper face 12a of the lower portion 12 has, substantially in its central portion, a relief zone which determines the lower wall 30a of the cavity 30.

This lower wall 30a of the cavity 30 reproduces, in negative, the lower surface 2b of the base component 2. Moreover, this lower wall 30a of the cavity 30 is affected, in certain areas, by the shaped proximal ends 26 of the further movable rods 16c, since they determine particular portions of the lower surface 2b of the base component 2 itself.

The lower portion 12 of the mold 10 also comprises a lower face 12b, substantially parallel to the plane on which the mold 10 lies and opposite to the upper face 12a.

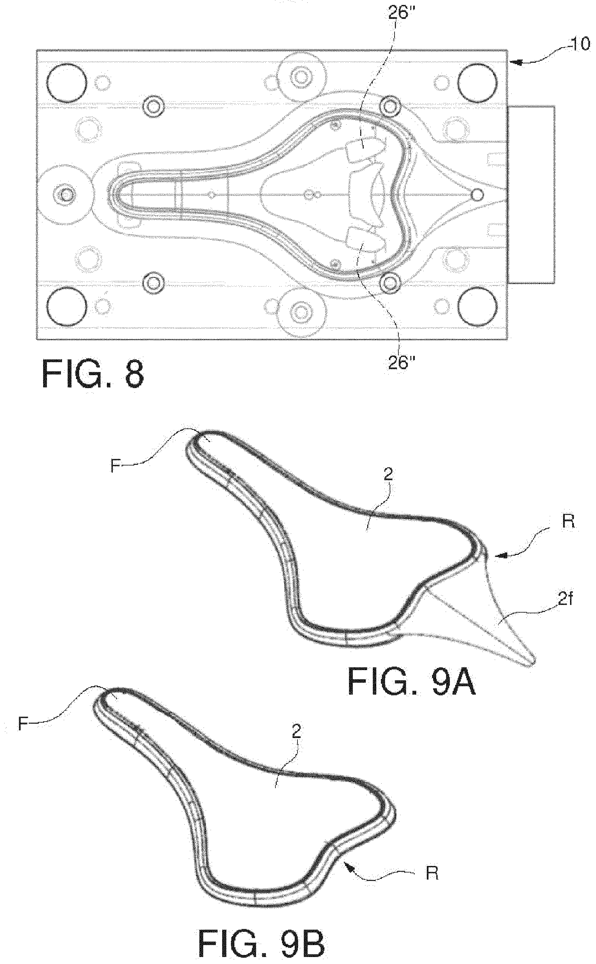

At the perimetric profile of the cavity 30 there is the separation line between the upper portion 14 and the lower portion 12 of the mold 10. Along this perimetric profile, at the insertion unit 18, is the pilot channel 18b for the insertion hole 18a. The pilot channel 18b has a substantially flat configuration parallel to the plane on which the mold 10 lies and has a junction area between hole 18a and perimeter profile/cavity 30. Therefore, once the solidification of the material that will constitute the base component 2 is completed, at the pilot channel it will remain some material that constitutes a sprue or flash 2f (visible for example in figure 9A, 9B), which will then be trimmed and eliminated to obtain the finished base component 2.

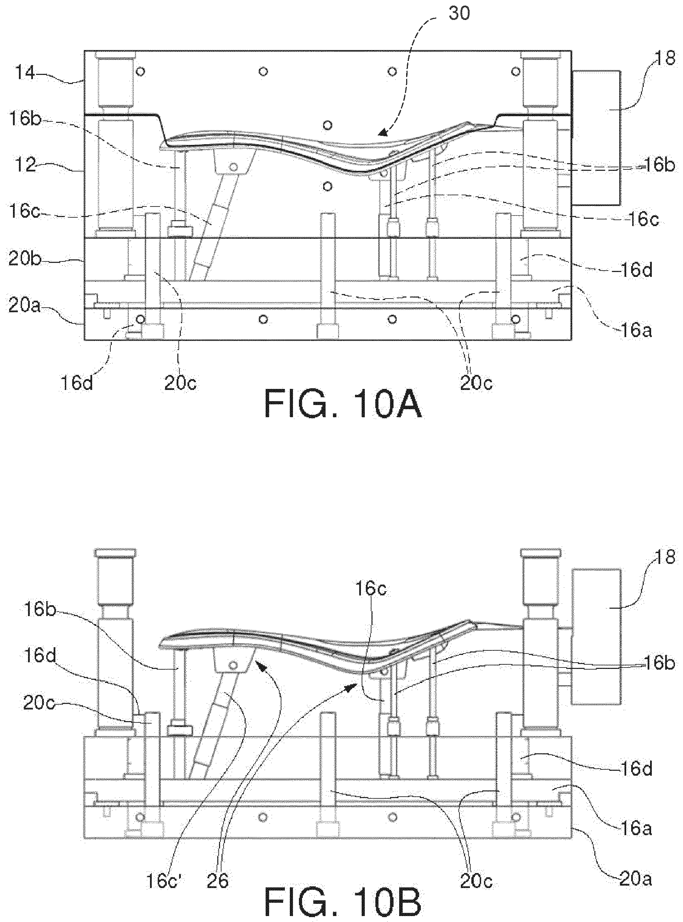

As can be seen, for example, in figures 10A and 10B, the supporting platform 20, when present, is constrained to the lower portion 12 of the mold 10 (for example by means of constraint pins 20c) so that, during the movement of the various portions of the mold itself, these two components remain united.

As can be seen, for example, in figures 2, 10A and 10B, the extraction plate 16a can reversibly slide vertically upwards or downwards, in order to move the movable rods 16b, 16c.

The movement of the extraction plate 16 can be adjusted and/or constrained by sliding guides 16d, which guide the reversible movement of the extraction plate 16a itself.

In use, according to a version of the invention, the extraction plate 16a moves upward and pushes the movable rods 16b and the further movable rods 16c upwards. In the absence of the extraction plate 16a, the movable rods 16b and/or 16c can move automatically, guided by other movement means, both synchronously and independently of at least one with respect to the others.

The movable rods 16b are - in at least one version of the invention - appointed to remove and/or lift the base component 2 from the lower portion 12 of the mold 10.

In the version wherein at least one further movable rod 16c moves by lifting in a diagonal direction, in particular towards the centre of the mold 10, it also contributes to detaching and/or lifting the printed base component 2 from the lower portion 12 (in particular from the lower wall of the cavity 30), at the same time causing any printed undercuts and/or holes in the base component 2 to be released.

As regards the further movable rods 16c, we can identify a first further movable rod 16c', located at the frontal portion 2F of the base component 2 which must be printed. Therefore, this first further movable rod 16c' is positioned in the frontal part of the mold 10, at the area of the more tapered cavity 30, which will determine the formation of the frontal portion 2F itself of the base component 2. Given that in such zone 2F, at least in a version of the invention, in the lower surface 2b of the base component 2 there is a seat 24c shaped to receive and constrain the front ends 5c of the prongs and/or having a shape suitable for receiving and constraining the U-connected front end 5c of the fork 5, the first shaped proximal end 26' of the first further movable rod 16c' is shaped so as to make, in the frontal portion 2F of the lower surface 2b of the base component 2 to be printed, the seat 24c of the same.

In at least one version of the invention, this proximal end 26' is made substantially wedge-shaped, wherein this wedge can be composed of a central body from which at least one tongue 27 (corresponding to the at least one seat 24c) departs. This at least one tongue 27 extends towards an end of the mold 10 opposite to that corresponding to the rear portion 2R of the base component 2. In this way, the seat 24c will have an opening conveniently shaped to house the front ends 5c of the fork 5, which opening is oriented towards the rear portion 2R of the base component 2 and extends instead inside the latter, towards its front portion 2F.

In a version of the invention, this tongue 27 extends towards an end of the mold 10 opposite to the one where there is the insertion unit 18.

This first further movable rod 16c' moves upward in a direction tilted towards the interior of the mold 10.

In doing so, in a version of the invention, at least the first further movable rod 16c' is able to translate the base component 2 towards a direction corresponding to the rear portion 2R of the base component 2 itself, freeing up any undercuts and/or holes created during molding.

Furthermore, at least in one version of the invention, in the lower surface 2b of the base component 2, at its rear region 2R, there are at least one, or better two seats 24b, shaped to receive and constrain the rear ends 5b of the prongs of the fork 5.

Therefore, there are at least one, or better two, second further movable rods 16c", each provided with a second proximal end 26" shaped so as to make, in the rear zone 2R of the lower surface 2b of the base component 12 to be printed, the at least one seat 24b thereof.

In at least one version of the invention, said at least one second proximal end 26" is substantially made with a pin 28 (corresponding to the at least one seat 24b). This pin 28 can extend from a central body of the at least one second proximal end 26".

This at least one pin 28 extends towards an end of the mold 10 opposite to that corresponding to the front portion 2F of the base component 2 or towards an end of the mold 10 corresponding to the rear portion 2R of the base component 2. In this way, each seat 24b will have an opening conveniently shaped to house one of the rear ends 5b of the prongs of the fork 5, which opening is oriented towards the front portion 2F of the base component 2 and extends instead inside the latter, towards its rear portion 2R.

In a version of the invention, such at least one second further movable rod 16c" raises in a substantially vertical direction. In this case, the second proximal end 26" and/or the pin 28 can be tilted with respect to the substantially vertical direction of the second further mobile rods 16c". The second proximal end 26" and/or the pin 28 are therefore tilted at the back towards the top, in such a way to allow in any case the extraction of the molded piece thanks to the movement of the mobile rods 16ba nd of the first further mobile rod 16c', which as said is tilted towards the inner portion of the mold 10. The configuration of the second proximal end 26" and/or of the pin 28 corresponds to the direction of the prongs of the fork 5 which, in this version, raise towards the top at their back portion.

In a further version of the invention, such at least one second further movable rod 16c" moves upward in a direction tilted towards the interior of the mold 10 and/or tilted towards the first further movable rod 16c'. Therefore, in the event that at least one second further movable rod 16c" moves upward in a tilted direction, such direction is opposite to that of the first further movable rod 16c'.

In doing so, at least the first further movable rod 16c' and/or in combination with the movement of such at least one second further movable rod 16c", is capable of translating the base component 2 towards a direction corresponding to the rear portion 2R of the base component 2 itself, freeing up any undercuts and/or holes created during molding, and/or (without translating the molded piece) to freeing up any undercuts and/or holes created during molding, for example by making the pins 28 come out from the molded seats 24b, and/or the tongue 27 from the molded seat 24c.

To keep the molded piece in position, i.e. without translating it, in a version of the invention, the movable rods 16b can have, at their proximal end, engagement means (for example in the form of cylinders or tips) with the base component 2. Such cylinders or tips, however, do not create holes in the base component 2 such as to compromise the functionality and mechanical strength and support capabilities thereof necessary for its correct use.

In a variant of the invention, the shaped proximal ends 26 of the further movable rods 16c can be pivoted or hinged or constrained by means of a joint, for example, a ball joint to the respective further movable rods 16c. In this way, it is possible to vary the tilting of these proximal ends 26 according to the molding need or according to the desired conformation to achieve in the base component 1.

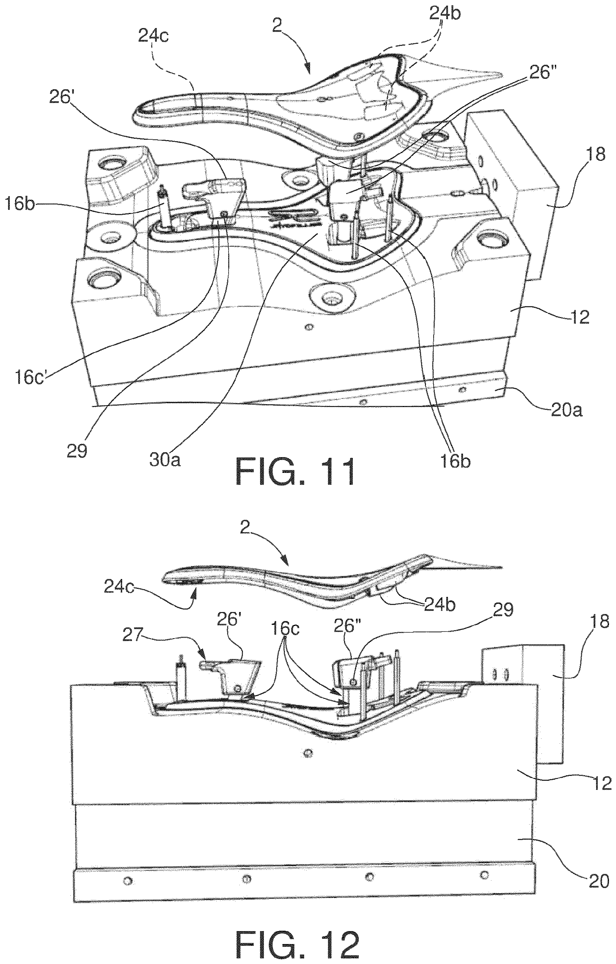

In the figures such pin, constraining or ball means can be exemplified with the reference number 29 shown in figures 11 and 12.

In an alternative embodiment of the invention, in order to release the base component 2 molded from the mold 10, retractable means could be provided, such as for example a tongue and/or a retractable pin, located at the proximal ends of the further movable rods.

For example, such retractable means can be in the extracted position, so as to form undercuts and/or holes in the base component 2, with particular reference to its lower surface 2b.

Once the material with which this component is made has solidified, the movable rods and/or the further movable rods raise and the retractable means are retracted within the respective ends, thus freeing up the undercuts and/or holes made through the same; of course, suitable sealing means will be present so as to prevent the material composing the base component 2 from penetrating into the slots which allow these retractable means to be moved outwards and/or inwards. In the presence of such retractable means, the movements of the respective movable rods could be along a vertical direction, not tilted, still allowing the base component 2 to be released from the mold, once its molding stage has ended. Alternatively, the retractable means could still be mounted on movable rods, at least one of which is raised in a direction tilted with respect to the vertical.

In all cases, in order to print the base component 2, the proximal ends 26 of the further movable rods 16c constitute the lower wall 30a of the lower portion 12 of the mold 10.

Subsequently, the movable rods 16b and the further movable rods 16c raise the base component 2 molded from the mold 10, also freeing up any undercuts and/or holes thereof due to the movement of at least one further movable rod 16c (for example in particular of the first further movable rod 16c') or of the proximal end 26 of the same.

As can be noted, the movable rods 16b and also the further movable rods 16c act directly on the base component 2 to determine the molding and the removal from the mold 10.

As can be seen, the solution of the mold 10 according to the present invention reduces the labour time during the molding step since an operator does not need to insert manually inserts for the undercuts and at the same time the flashes are reduced around the printed piece. In fact, the extraction plate 16a, when present, in addition to moving the movable rods 16b, 16c and releasing the molded base component 2 and the corresponding undercuts, also works in closure, pressing during the molding the shaped proximal ends 26 of the rods downwards and then "sealing" better the lower wall 30a of the cavity 30.

The molding process according to the present invention, carried out by means of the mold 10, provides for the execution of the following steps:
- possible application of a release agent on the mold 10, for example in particular on the lower wall 30a and on the upper wall 30b of the cavity 30 (such step can optionally provide for the positioning of the shaped proximal ends 26 of the further movable rods 16c so as to determine the lower wall 30a of the cavity 30 and the consequent forming of the base component 2 with possible undercuts and/or holes);
- introducing into the cavity 30 of the mold 10 the material, such as for example the polyurethane or the polyurethane material, by the insertion unit 18;
- raising the movable rods 16b and the further movable rods 16c so as to allow the extraction of the molded base component 2 and the freeing up of any undercuts and/or holes, with consequent extraction of the molded piece.

In particular, the step of moving the base component 2 takes place by moving the movable rods 16b in a vertical direction upwards so as to lift and/or detach the molded base component 2 from the lower portion 12 and/or moving upwards the further movable rods 16c, each provided with a shaped proximal end 26, which define any undercuts and/or holes in the lower surface 2b of the base component 2.

According to this method, the step of releasing the base component 2 from any undercuts and/or holes takes place:
moving at least a first further movable rod 16c and/or the first further movable rod 16c' upwards in a tilted direction towards the interior of the mold and/or
rotating the shaped proximal end 26 of the further movable rods 16c, by means of a joint or pin, or constraining, or ball means 29, and/or
retracting a tongue 27 and/or a pin 28 of the shaped proximal ends 26 inside the further movable rods 16c.

The mold 10 (or a plurality of molds 10 depending on the expected productivity and/or the diversity of items to be produced simultaneously) can be installed in different types of plant (such as rail, in-line, carousel or rotary table, etc.).

The base component 2 can undergo at least one of the following further steps:
- cutting the material that forms the sprue or flash, and/or
- trimming the piece, i.e. eliminating the flash along the closure perimeter of the mold, and/or
- cleaning the piece, in particular from the release agent remaining on the surface of the piece and/or any dust, and/or
- storing/stocking the finished base component 2.

Once a finished base component 2 is obtained, the following further processing are possible.

The base component 2 can be applied to a foaming mold (for example a male mold) for making the padding component 3 and the possible application of the covering 4.

The steps of the process for the production of a saddle 1, in addition to those described above for making the base component 2, are the following:
- positioning a mold having a cavity shaped like the upper part of a saddle 1,
- positioning the covering 4 (automatically or manually by an operator) above the cavity for the saddle,
- possible start-up of the vacuum process to make the covering 4 stick to the cavity wall,
- anchor the base component 2 (with the lower surface 2b) to the mold (and the upper surface 2a facing towards the cavity for the saddle),
- inserting and possible hardening and/or thickening of the material for making the padding component 3 between covering 4 and base component 2,
- extracting the printed saddle.

As it has been seen, the padding component 3 could be made directly, for example printed, on the base component 2 or fixed thereto, for example by gluing. In this way, the padding component is firmly constrained, i.e. it is not removable unless it is damaged, with respect to the base component 2.

Alternatively, the saddle 1 could be provided with removable constraining means of the padding component 3 to the base component 2, which removable constraining means can comprise screws, snap engagement means, grafting means, bayonet anchoring means or similar means. Due to this arrangement it is possible to easily and quickly assemble and disassemble the base component 2 and the padding component 3.

If desired, in the event wherein the support element is a saddle 1, this can also comprise engagement means for an accessory, such as a handle or protective components, a light, a bag, a bottle-holder or other element which may be useful for the user.

Moreover, a saddle 1 according to the present invention can also be equipped with one or more rapid attachment structures or ICS, for example supported by the removable constraining means.

The saddle 1 can further comprise at least one tongue extending, from the lower surface 3b of the padding component 3, towards the front F or towards the rear R of the saddle 1. Such tongue can be engaged with a suitable seat formed for example in the upper surface 2a of the base component 2.

Of course, the positions of the tongue and the appropriate seat could be reversed without limitations.

In this way, a relative sliding could be obtained between the base component 2 and the padding component 3. If desired, the tongue and the respective seat can be formed at the tapered frontal part 2F of the base component 2 and of the padding component 3.

In the base component 2, and at an intermediate portion thereof, a longitudinal through groove (not shown) can also be formed.

The present invention, in the case wherein the saddle 1 is equipped with removable constraining means of the padding component 3 to the base component 2, also relates to a kit, for making a support element as indicated above, comprising at least one base component 2 and two or more padding components 3. These latter may have different shape or dimension from one another, wherein each padding component is equipped with removable constraining means to the base component 2.

In this event, the padding component 3 can project laterally and/or on the rear and/or on the front with respect to the base component 2, and, advantageously, the lower surface 3b of the padding component 3 can therefore be greater than the upper surface 2a of the basic component 2. In such version, the engagement means can be advantageously formed at a central or intermediate area of the padding component 3, so as to removably anchor the base component 2 and the padding component 3, although the latter has a greater width or protrudes with respect to the base component 2.

If desired, the lower surface 3b of the padding component 3 can be greater than the upper surface 2a of the base component 2, and therefore extend beyond the upper surface 2a of the base component 2, at sections on the sides and/or on the rear and/or on the front of the padding component 3.

The base component 2 can then be configured so that it can be at least partly, and preferably completely, housed or positioned to size in a recess or hollow portion delimited in the padding component 3.

The base component 2 and the padding component 3 can be made entirely of polyurethane, and possibly also the covering 4 can be made of polyurethane.

The saddle 1, according to a further version of the invention, wherein for example the padding component 3 and the base component 2 can be released from one another, can provide a rigid base, at the lower surface 3b of the padding component 3. Such rigid base is adapted to make contact or abutment with the base component 2 of the saddle itself.

Such rigid base can be made of the same material and/or in the same way as the base component 2 and be integrated or rigidly constrained to the padding component 3.

As will be understood, a support element for the human body, in particular a saddle according to a version of the present invention, has the base component 2, the padding component 3 and, possibly the covering 4, all made entirely of polyurethane.

Moreover, the use of polyurethane also for the base component allows to reduce the manufacturing costs, since it is possible to directly mold the polyurethane in a mold near the molds or production units of the other components of the saddle. Therefore, there is not necessarily a need for warehouses in which store the shells, since they are produced in line with the other components of the saddle, so that production costs are considerably reduced.

As a result, costs and time for the saddle design are also reduced.

Moreover, the fact of making one or more shells of the polyurethane padding component ensures a better adhesion or union between the base component and the padding component.

In this way, the padding component and the at least one shell or base component constitute a single body made of a single material, i.e. polyurethane.

Furthermore, any inserts, for example of gel, positioned between covering 4 and padding component 3 or between padding component 3 and base component 2 are preferably made of a polyurethane material, to ensure excellent adhesion and chemical affinity between the various components.

As said, the padding component 3 constitutes the comfort portion for the user, while the base component 2 constitutes the support portion of the user's weight. Therefore, despite being made of the same material, i.e. the polyurethane, the padding component 3 has a softer consistency than the base component 2 while the base component 2 presents a more rigid consistency, for example capable of supporting the weight of a user without deforming, with respect to the padding component 3.

Clearly, also due to the presence of removable constraint means between shell and padding, a saddle according to the present invention is adaptable or customizable according to the needs or tastes of users.

As can be deduced from the preceding description, with respect to the traditionally used steel molds, the mold according to the present invention allows to reduce the manufacturing times and the costs. Moreover, it is possible to satisfy the market with new products, thanks to the mold according to the present invention which can easily adapted to the needs of the market and of the user.

Furthermore, usually the shells obtained with traditional methods must be stored for their subsequent programmed use and, before use, treated on the surface to be compatible with the gluing or foaming of the paddings. Design, costs, manufacturing times, storage, etc. are all disadvantages of the known technique.

Moreover, since the behaviour of the plastic is not constant over time, the prolonged storage of traditional shells can cause deformations and the withdrawal of the material, and these are one of the main reasons for rejection, when they must then be joined to the relative padding, in addition to the fact that any deformations prevent the traditional shell from adapting perfectly to the mold, causing further waste and squander in the saddle manufacturing process.

Even the performances of traditional shells are not, for the aforementioned reasons, always constant over time.

It can therefore be seen that the present invention allows to overcome the drawbacks of the known art, obtaining the production of base components with improved performances, more ecological and more adaptable to the specific needs of the sector or of users.

Furthermore, by improving the use of the raw material (for example polyurethane), the transit times are shortened in the various processing steps and the storage warehouses as well as the internal movements of the base components 2 can be eliminated.

As a result, labour costs and risks of product obsolescence can be reduced.

Furthermore, it is possible to have total compatibility for the materials that make the base component 2 and the padding component 3 (and/or the covering 4), for the saddle 1 there can be a noticeable reduction in terms of waste, CO₂ emissions (also in view of the reductions envisaged by the UN states by 2050), lower consumptions and consequent lower environmental impact both at the production level and for the product disposal once it has reached the end of its life. Modifications and variants of the invention are possible within the scope of protection defined by the claims.

## Claims

1. Mold (10) for making a base component (2) of a support element for the human body, such as for example a saddle (1) for vehicles, e.g. for bicycles or motorcycles, a seat, a grip, a handle, an arm, a back, a headrest, an equipment for sport or leisure, wherein said mold comprises a portion, lower during use (12), said lower portion (12) comprising a cavity (30), adapted for molding said base component (2), wherein said mold (10) comprises an extraction system (16) comprising movable rods (16b), adapted during use to release and/or lift and/or make the molded base component (2) exit from said mold (10) and/or from said lower portion (12), and further movable rods (16c), during use adapted to make an undercut and/or holes in said base component (2) and/or in a lower surface (2b) thereof, **characterized in that** said movable rods (16b) are movable along a vertical direction, substantially perpendicular to a plane on which said mold (10) lies and said further movable rods (16c) comprise a first further movable rod (16c'), placed at a tapered and during use frontal zone of the cavity (30), adapted to correspond with a frontal portion (2F) of the base component (2), wherein said first further movable rod (16c') moves upward in a direction tilted towards the interior of said mold (10) and is tilted towards the interior of said mold (10) with respect to the vertical direction along which said movable rods (16b) are extended and/or towards at least one of said movable rods (16b) **and in that** said first further movable rod (16c') comprises a first proximal end (26') that is substantially wedge-shaped, in a manner such to make, during use, a seat (24c) at the frontal portion (2F) of the lower surface (2b) of the base component (2), said first proximal end (26') comprising a central body from which at least one tongue (27) departs, corresponding during use with the seat (24c), wherein said tongue (27) is extended towards one end of the mold (10) opposite that corresponding, during use, with the enlarged rear portion (2R) of the base component (2).

2. Mold (10) according to claim 1, comprising a portion, upper during use (14), wherein said upper portion (14) is movable with respect to said lower portion (12) which is fixed, and/or wherein said upper portion (14) is movable away from the lower portion (12), with consequent opening of the mold (10), and/or closer to the lower portion (12), with consequent closure of the mold (10), in a reversible manner.

3. Mold (10) according to claim 1 or 2, wherein said movable rods (16b) and/or said further movable rods (16c) are moved, during use, by an extraction plate (16a), and/or wherein said movable rods (16b) and/or said further movable rods (16c) are reversibly moved upward, away from said lower portion (12) or downward, closer to said lower portion (12) and/or comprise rods having substantially cylindrical section and/or a single body substantially rigid and/or not deformable during the movement.

4. Mold (10) according to any one of the preceding claims, wherein said further movable rods (16c) each have a shaped proximal end (26), wherein said proximal ends (26) are directed during use towards said cavity (30) and are adapted, during use, to obtain an undercut and/or holes in said base component (2) and/or in its lower surface (2b).

5. Mold (10) according to any one of the preceding claims, wherein said further movable rods (16c) comprise at least one second further movable rod (16c"), placed at an enlarged and during use rear zone of the cavity (30), adapted to correspond with a rear portion (2R) of the base component (2), wherein said at least one second further movable rod (16c") comprises a second proximal end (26") that is substantially pin-shaped (28), in a manner such to make, during use, at least one seat (24b) at the rear portion (2R) of the lower surface (2b) of the base component (2).

6. Mold (10) according to the preceding claim, wherein said pin (28) is extended starting from a central body of the at least one second proximal end (26") towards one end of said mold (10) opposite to that where said at least one first further movable rod (16c') is positioned.

7. Mold (10) according to any one of the preceding claims, wherein said proximal shaped ends (26, 26', 26") allow to determine said undercuts and/or holes and/or said seat (24c) and said seat (24b) in said base component (2) and/or in its lower surface (2b), for example suitable to determine the connection with a fork (5) of a saddle (1).

8. Mold (10) according to any one of the preceding claims, wherein at least one of said further movable rods (16c) and/or said first further movable rod (16c') and said at least one second further movable rod (16c") is/are moved upward during use along a direction tilted towards the interior of said mold (10) with respect to the vertical direction along which said movable rods (16b) are extended and/or tilted with respect to the plane on which said mold (10) lies.

9. Mold (10) according to any one of the preceding claims, wherein said shaped proximal ends (26) of said further movable rods (16c) are pivoted or hinged or constrained, by means of a joint or pin means, or constraining means or ball means (29), to the respective further movable rods (16c), in a manner so as to be able to vary the tilt of said proximal ends (26) and/or wherein said shaped proximal ends (26) of said further movable rods (16c) comprise retractable means, such as a retractable tongue (27) and/or pin (28), adapted during use to make said tongue (27) and/or said pin (28) retract inside said respective further movable rods (16c), so as, during use, to release the possible undercuts and/or holes molded in the base component (2).

10. Mold (10) according to any one of the preceding claims, wherein said lower portion (12) has, during use, an upper face (12a) and a lower face (12b), the lower face (12b) being substantially parallel to the plane on which said mold (10) lies, wherein said upper face (12a), opposite and substantially parallel to the lower face (12b), is oriented towards the interior of the mold (10) and has a relief zone that determines a lower wall (30a) of said cavity (30), adapted during use to mold a lower surface (2b) of the base component (2).

11. Mold (10) according to any one of the preceding claims when dependent on claim 5 and on claim 11, wherein said lower wall (30a) of the cavity (30) is affected, in specific areas, by the shaped proximal ends (26) of said further movable rods (16c).

12. Mold (10) according to any one of the preceding claims, wherein said upper portion (14) has, during use, an external surface (14a) and an internal surface (14b), the external surface (14a) being substantially parallel to the plane on which said mold (10) lies, wherein said internal surface (14b), opposite and substantially parallel to the external surface (14a), is oriented towards the interior of the mold (10) and has a recessed zone that determines an upper wall (30b) of said cavity (30), adapted during use to mold an upper surface (2a) of the base component (2) and/or wherein said upper portion (14) has pin means (14c) adapted to be engaged, in a reversible and/or slidable manner, with said lower portion (12) of the mold (10), in particular with seat means (12c) of said lower portion (12) adapted to house said pin means (14c).

13. Mold (10) according to any one of the preceding claims, comprising an insertion unit (18) for a material of said base component (2), wherein said insertion unit (18) comprises a hole (18a), capable of placing said cavity (30) in fluid communication with an insertion system of known type, and/or wherein said lower portion (12) comprises a pilot channel (18b), placed at said hole (18a), capable during use of conveying the material in fluid or liquid state that comes from the insertion system and which constitutes, during use, said base component (2).

14. Mold (10) according to any one of the preceding claims, comprising a supporting platform (20), constituted by a support base (20a) and, possibly, by support walls (20b), wherein said supporting platform (20) is placed below said lower portion (12) and/or wherein said supporting platform (20) at least partially houses said extraction system (16).

15. Method for making a base component (2) of a support element for the human body, such as for example a saddle for vehicles, e.g. for bicycles or motorcycles, a seat, a grip, a knob, an arm, a back, a headrest, an equipment for sport or leisure, comprising the following steps:
providing a mold (10) according to any one of the claims 1 to 14 comprising a lower portion (12) and a cavity (30),
applying a release agent on the surface of the cavity (30) of the mold (10), injecting, spraying or inserting the material adapted to make the base component (2) within the cavity (30) of said mold (10),
making said material solidify,
moving, upward in vertical direction, one or more movable rods (16b) so as to lift and/or detach the molded base component (2) from said lower portion (12) of said mold (10),
moving upward one or more further movable rods (16c), each provided with a shaped proximal end (26), such shaped proximal ends (26) determine or define at least part of a lower wall (30a) of the cavity (30) and possible undercuts and/or holes in the lower surface (2b) of the base component (2),
wherein in order to release said base component (2) from the possible undercuts and/or holes, at least one of the following steps occurs:
moving at least one first further movable rod (16c) and/or a first further movable rod (16c') upward in a direction tilted towards the interior of the mold and/or towards at least one of said movable rods (16b) and/or
rotating said shaped proximal end (26) of said further movable rods (16c), by means of a joint or pin means, or constraining means or ball means (29), and/or
retracting a tongue (27) and/or a pin (28) of said shaped proximal ends (26) to the interior of said further movable rods (16c).

## Patentansprüche

1. Form (10) zur Herstellung einer Basiskomponente (2) eines Stützelements für den menschlichen Körper, wie zum Beispiel eines Sattels (1) für Fahrzeuge, z.B. für Fahrräder oder Motorräder, eines Sitzes, eines Griffs, eines Handgriffs, eines Arms, eines Rückens, einer Kopfstütze, einer Sport- oder Freizeitausrüstung, worin die besagte Form einen bei Verwendung unteren Abschnitt (12) umfasst, wobei der besagte untere Abschnitt (12) einen Hohlraum (30), der zum Formen der besagten Basiskomponente (2) ausgelegt ist, umfasst, worin die besagte Form (10) ein Ausziehsystem (16), umfassend bewegliche Stangen (16b), die bei Verwendung zum Lösen und/oder zum Heben und/oder zum Austretenlassen der geformten Basiskomponente (2) aus der besagten Form (10) und/oder aus dem besagten unteren Abschnitt (12) ausgelegt sind, und weitere bewegliche Stangen (16c), die bei Verwendung zur Ausführung einer Hinterschneidung und/oder von Löchern in der besagten Basiskomponente (2) und/oder in einer unteren Oberfläche (2b) davon ausgelegt sind, umfasst, **dadurch gekennzeichnet, dass** die besagten beweglichen Stangen (16b) entlang einer vertikalen Richtung im Wesentlichen senkrecht zu einer Ebene, auf der die besagte Form (10) liegt, beweglich sind und dass die besagten weiteren beweglichen Stangen (16c) eine erste weitere bewegliche Stange (16c'), angeordnet in einem sich verjüngenden und bei Verwendung vorderen Bereich des Hohlraums (30), der zur Übereinstimmung mit einem vorderen Abschnitt (2F) der Basiskomponente (2) ausgelegt ist, umfassen, worin sich die besagte erste weitere bewegliche Stange (16c') aufwärts in eine zum Inneren der besagten Form (10) hin geneigte Richtung bewegt und zum Inneren der besagten Form (10) in Bezug auf die vertikale Richtung, entlang der sich die besagten beweglichen Stangen (16b) erstrecken, und/oder zu mindestens einer der besagten beweglichen Stangen (16b) hin geneigt ist, **und dadurch, dass** die besagte erste weitere bewegliche Stange (16c') ein erstes proximales Ende (26') umfasst, das im Wesentlichen keilförmig ist, sodass bei Verwendung ein Sitz (24c) an dem vorderen Abschnitt (2F) der unteren Oberfläche (2b) der Basiskomponente (2) ausgebildet wird, wobei das besagte erste proximale Ende (26') einen zentralen Körper umfasst, von dem mindestens eine Zunge (27) ausgeht, die bei Verwendung mit dem Sitz (24c) übereinstimmt, worin sich die besagte Zunge (27) zu einem Ende der Form (10) hin erstreckt, das demjenigen gegenüberliegt, das bei Verwendung mit dem vergrößerten hinteren Abschnitt (2R) der Basiskomponente (2) übereinstimmt.

2. Form (10) nach Anspruch 1, umfassend einen bei Verwendung oberen Abschnitt (14), worin der besagte obere Abschnitt (14) in Bezug auf den besagten unteren Abschnitt (12), der feststehend ist, beweglich ist, und/oder worin der besagte obere Abschnitt (14) von dem unteren Abschnitt (12) weg, mit daraus resultierendem Öffnen der Form (10), und/oder näher an den unteren Abschnitt (12) heran, mit daraus resultierendem Schließen der Form (10), auf reversible Weise beweglich ist.

3. Form (10) nach Anspruch 1 oder 2, worin die besagten beweglichen Stangen (16b) und/oder die besagten weiteren beweglichen Stangen (16c) bei Verwendung durch eine Ausziehplatte (16a) bewegt werden, und/oder worin die besagten beweglichen Stangen (16b) und/oder die besagten weiteren beweglichen Stangen (16c) reversibel aufwärts, weg von dem besagten unteren Abschnitt (12), oder abwärts, näher an den besagten unteren Abschnitt (12), heran, bewegt werden und/oder Stangen mit im Wesentlichen zylindrischem Querschnitt und/oder einen einzelnen Körper, der im Wesentlichen starr und/oder während der Bewegung nicht verformbar ist, umfassen.

4. Form (10) nach irgendeinem der vorangegangenen Ansprüche, worin die besagten weiteren beweglichen Stangen (16c) jeweils ein geformtes proximales Ende (26) aufweisen, worin die besagten proximalen Enden (26) bei Verwendung zu dem besagten Hohlraum (30) hin gerichtet sind und bei Verwendung ausgelegt sind, eine Hinterschneidung und/oder Löcher in der besagten Basiskomponente (2) und/oder in ihrer unteren Oberfläche (2b) zu erhalten.

5. Form (10) nach irgendeinem der vorangegangenen Ansprüche, worin die besagten weiteren beweglichen Stangen (16c) mindestens eine zweite weitere bewegliche Stange (16c") umfassen, die an einem vergrößerten und bei Verwendung hinteren Bereich des Hohlraums (30), ausgelegt zur Übereinstimmung mit einem hinteren Abschnitt (2R) der Basiskomponente (2), angeordnet ist, worin die besagte mindestens eine zweite weitere bewegliche Stange (16c") ein zweites proximales Ende (26") umfasst, das im Wesentlichen in einer derartigen Weise stiftförmig (28) ist, dass bei Verwendung mindestens ein Sitz (24b) am hinteren Abschnitt (2R) der unteren Oberfläche (2b) der Basiskomponente (2) gebildet wird.

6. Form (10) nach dem vorangegangenen Anspruch, worin sich der besagte Stift (28) ausgehend von einem zentralen Körper des mindestens einen zweiten proximalen Endes (26") zu einem Ende der besagten Form (10) hin erstreckt, das demjenigen gegenüberliegt, an dem die besagte mindestens eine erste weitere bewegliche Stange (16c') angeordnet ist.

7. Form (10) nach irgendeinem der vorangegangenen Ansprüche, worin die proximalen geformten Enden (26, 26',26") es erlauben, die besagten Hinterschneidungen und/oder Löcher und/oder den besagten Sitz (24c) und den besagten Sitz (24b) in der besagten Basiskomponente (2) und/oder in ihrer unteren Oberfläche (2b) zu bestimmen, beispielsweise geeignet, um die Verbindung mit einer Gabel (5) eines Sattels (1) zu bestimmen.

8. Form (10) nach irgendeinem der vorangegangenen Ansprüche, worin mindestens eine der besagten weiteren beweglichen Stangen (16c) und/oder die besagte erste weitere bewegliche Stange (16c') und die besagte mindestens eine zweite weitere bewegliche Stange (16c") bei Verwendung aufwärts entlang einer Richtung bewegt wird/werden, die zum Inneren der besagten Form (10) in Bezug auf die vertikale Richtung, entlang der sich die besagten beweglichen Stangen (16b) erstrecken, hin geneigt ist und/oder in Bezug auf die Ebene, auf der die besagte Form (10) liegt, hin geneigt ist.

9. Form (10) nach irgendeinem der vorangegangenen Ansprüche, worin die besagten geformten proximalen Enden (26) der besagten weiteren beweglichen Stangen (16c) mittels eines Gelenks oder Stiftmittels oder Haltemittels oder Kugelmittels (29) an den jeweiligen weiteren beweglichen Stangen (16c) in einer solchen Weise schwenkbar oder gelenkig oder festgehalten angeordnet sind, dass sie in der Lage sind, die Neigung der besagten proximalen Enden (26) zu ändern und/oder worin die besagten geformten proximalen Enden (26) der weiteren beweglichen Stangen (16c) einziehbare Mittel, wie eine einziehbare Zunge (27) und/oder einen einziehbaren Stift (28) umfassen, die bei Verwendung dazu ausgelegt sind, die besagte Zunge (27) und/oder den besagten Stift (28) in die besagten jeweiligen weiteren beweglichen Stangen (16c) einzuziehen, um bei Verwendung die möglichen Hinterschneidungen und/oder Löcher, die in der Basiskomponente (2) geformt sind, freizugeben.

10. Form (10) nach irgendeinem der vorangegangenen Ansprüche, worin der besagte untere Abschnitt (12) bei Verwendung eine Oberseite (12a) und eine Unterseite (12b) aufweist, wobei die Unterseite (12b) im Wesentlichen parallel zu der Ebene ist, auf der die besagte Form (10) liegt, worin die besagte Oberseite (12a), die der Unterseite (12b) gegenüberliegt und im Wesentlichen parallel zu ihr ist, zum Inneren der Form (10) hin ausgerichtet ist und einen Reliefbereich aufweist, der eine untere Wand (30a) des besagten Hohlraums (30) bestimmt, die bei Verwendung dazu ausgelegt ist, eine untere Oberfläche (2b) der Basiskomponente (2) zu formen.

11. Form (10) nach irgendeinem der vorangegangenen Ansprüche, wenn abhängig von Anspruch 5 und von Anspruch 11, worin die besagte untere Wand (30a) des Hohlraums (30) in bestimmten Bereichen durch die geformten proximalen Enden (26) der besagten weiteren beweglichen Stange (16c) beeinflusst wird.

12. Form (10) nach irgendeinem der vorangegangenen Ansprüche, worin der besagte obere Abschnitt (14) bei Verwendung eine Außenfläche (14a) und eine Innenfläche (14b) aufweist, wobei die Außenfläche (14a) im Wesentlichen parallel zu der Ebene ist, auf der die besagte Form (10) liegt, worin die besagte Innenfläche (14b), die der Außenfläche (14a) gegenüberliegt und im Wesentlichen parallel zu ihr ist, zum Inneren der Form (10) hin ausgerichtet ist und einen vertieften Bereich aufweist, der eine obere Wand (30b) des besagten Hohlraums (30) bestimmt, die bei Verwendung dazu ausgelegt ist, eine obere Oberfläche (2a) der besagten Basiskomponente (2) zu formen und/oder worin der besagte obere Abschnitt (14) Stiftmittel (14c) aufweist, die dazu ausgelegt sind, in einer reversiblen und/oder gleitenden Weise mit dem besagten unteren Abschnitt (12) der Form (10), insbesondere mit Sitzmitteln (12c) des besagten unteren Abschnitts (12), der zur Aufnahme der besagten Stiftmittel (14c) ausgelegt ist, in Eingriff gebracht zu werden.

13. Form (10) nach irgendeinem der vorangegangenen Ansprüche, umfassend eine Einführeinheit (18) für ein Material der besagten Basiskomponente (2), worin die besagte Einführeinheit (18) ein Loch (18a) umfasst, das in der Lage ist, den besagten Hohlraum (30) in Fluidverbindung mit einem Einführsystem bekannten Typs zu bringen, und/oder worin der besagte untere Abschnitt (12) einen Pilotkanal (18b), angeordnet an dem besagten Loch (18a), umfasst, der bei Verwendung in der Lage ist, das Material in fluidem oder flüssigem Zustand, das von dem Einführsystem kommt und das bei Verwendung die Basiskomponente (2) bildet, zu fördern.

14. Form (10) nach irgendeinem der vorangegangenen Ansprüche, umfassend eine Stützplattform (20), die aus einer Stützbasis (20a) und gegebenenfalls aus Stützwänden (20b) besteht, worin die besagte Stützplattform (20) unter dem besagten unteren Abschnitt (12) angeordnet ist und/oder worin die besagte Stützplattform (20) mindestens teilweise das besagte Ausziehsystem (16) aufnimmt.

15. Verfahren zur Herstellung einer Basiskomponente (2) eines Stützelements für den menschlichen Körper, wie zum Beispiel eines Sattels (1) für Fahrzeuge, z.B. für Fahrräder oder Motorräder, eines Sitzes, eines Griffs, eines Knaufs, eines Arms, eines Rückens, einer Kopfstütze, einer Sport- oder Freizeitausrüstung, umfassend die folgenden Schritte:
Bereitstellen einer Form (10) nach irgendeinem der vorangegangenen Ansprüche 1 bis 14, umfassend einen unteren Abschnitt (12) und einen Hohlraum (30),
Auftragen eines Trennmittels auf die Oberfläche des Hohlraums (30) der Form (10),
Einspritzen, Sprühen oder Einführen des zur Herstellung der Basiskomponente (2) geeigneten Materials in den Hohlraum (30) der besagten Form (10),
Verfestigenlassen des besagten Materials, Aufwärtsbewegen in vertikale Richtung einer oder mehrerer beweglicher Stangen (16b), um die geformte Basiskomponente (2) von dem besagten unteren Abschnitt (12) der besagten Form (10) anzuheben und/oder zu lösen,
Aufwärtsbewegen einer oder mehrerer weiterer beweglicher Stangen (16c), die jeweils mit einem geformten proximalen Ende (26) versehen sind, wobei diese geformten proximalen Enden (26) mindestens einen Teil einer unteren Wand (30a) des Hohlraums (30) und mögliche Hinterschneidungen und/oder Löcher in der unteren Oberfläche (2b) der Basiskomponente (2) bestimmen oder definieren,
worin zum Lösen der besagten Basiskomponente (2) von den möglichen Hinterschneidungen und/oder Löchern mindestens einer der folgenden Schritte erfolgt:
Bewegen mindestens einer ersten weiteren beweglichen Stange (16c) und/oder einer ersten weiteren beweglichen Stange (16c') aufwärts in eine Richtung, die zum Inneren der Form (10) hin und/oder zu mindestens einer der besagten beweglichen Stangen (16b) hin geneigt ist und/oder
Drehen des besagten geformten proximalen Endes (26) der besagten weiteren beweglichen Stangen (16c) mittels eines Gelenks oder Stiftmittels oder Haltemittels oder Kugelmittels (29), und/oder
Einziehen einer Zunge (27) und/oder eines Stifts (28) der besagten geformten proximalen Enden (26) in das Innere der besagten weiteren beweglichen Stangen (16c).

## Revendications

1. Moule (10) pour fabriquer un composant de base (2) d'un élément de support pour le corps humain, comme par exemple une selle (1) pour des véhicules, par ex. pour des bicyclettes ou des motocyclettes, un siège, un manche, une poignée, un accoudoir, un dossier, un appuie-tête, un équipement pour le sport ou les loisirs, dans lequel ledit moule comprend une partie, inférieure pendant l'utilisation (12), ladite partie inférieure (12) comprenant une cavité (30), adaptée pour mouler ledit composant de base (2), dans lequel ledit moule (10) comprend un système d'extraction (16) comprenant des tiges mobiles (16b), adaptées pendant l'utilisation pour libérer et/ou lever et/ou faire sortir le composant de base (2) moulé dudit moule (10) et/ou de ladite partie inférieure (12), et des tiges mobiles supplémentaires (16c), adaptées pendant l'utilisation pour réaliser une découpe et/ou des trous dans ledit composant de base (2) et/ou dans une surface inférieure (2b) de celui-ci, **caractérisé en ce que** lesdites tiges mobiles (16b) sont mobiles le long d'une direction verticale, sensiblement perpendiculaire à un plan sur lequel ledit moule (10) repose et lesdites tiges mobiles supplémentaires (16c) comprennent une première tige mobile supplémentaire (16c'), placée dans une zone de la cavité (30) effilée et frontale pendant l'utilisation, adaptée pour correspondre à une partie frontale (2F) du composant de base (2), dans lequel ladite première tige mobile supplémentaire (16c') se déplace vers le haut dans une direction inclinée vers l'intérieur dudit moule (10) et est inclinée vers l'intérieur dudit moule (10) par rapport à la direction verticale de long de laquelle lesdites tiges mobiles (16b) sont étendues et/ou vers au moins l'une desdites tiges mobiles (16b) et **en ce que** ladite première tige mobile supplémentaire (16c') comprend une première extrémité proximale (26') sensiblement en forme de coin, d'une telle façon pour réaliser, pendant l'utilisation, un siège (24c) au niveau de la partie frontale (2F) de la surface inférieure (2b) du composant de base (2), ladite première extrémité proximale (26') comprenant un corps central dont part au moins une patte (27), correspondant pendant l'utilisation au siège (24c), dans lequel ladite patte (27) est étendue vers une extrémité du moule (10) opposée à celle correspondant, pendant l'utilisation, à la partie arrière agrandie (2R) du composant de base (2) .

2. Moule (10) selon la revendication 1, comprenant une partie, supérieure pendant l'utilisation (14), dans lequel ladite partie supérieure (14) est mobile par rapport à ladite partie inférieure (12) qui est fixe, et/ou dans lequel ladite partie supérieure (14) est mobile loin de la partie inférieure (12), avec l'ouverture conséquente du moule (10), et/ou près de la partie inférieure (12), avec la fermeture conséquente du moule (10), de manière réversible.

3. Moule (10) selon la revendication 1 ou 2, dans lequel lesdites tiges mobiles (16b) et/ou lesdites tiges mobiles supplémentaires (16c) sont déplacées, pendant l'utilisation, par une plaque d'extraction (16a), et/ou dans lequel lesdites tiges mobiles (16b) et/ou lesdites tiges mobiles supplémentaires (16c) sont déplacées de manière réversible vers le haut, loin de ladite partie inférieure (12) ou vers le bas, plus près de ladite partie inférieure (12) et/ou comprennent des tiges de section sensiblement cylindrique et/ou un corps unique sensiblement rigide et/ou non déformable pendant le mouvement.

4. Moule (10) selon l'une quelconque des revendications précédentes, dans lequel lesdites tiges mobiles supplémentaires (16c) ont chacune une extrémité proximale formée (26), dans lequel lesdites extrémités proximales (26) sont dirigées pendant l'utilisation vers ladite cavité (30) et sont adaptées, pendant l'utilisation, pour obtenir une découpe et/ou des trous dans ledit composant de base (2) et/ou dans sa surface inférieure (2b).

5. Moule (10) selon l'une quelconque des revendications précédentes, dans lequel lesdites tiges mobiles supplémentaires (16c) comprennent au moins une deuxième tige mobile supplémentaire (16c"), placée à une zone agrandie et pendant l'utilisation arrière de la cavité (30), adaptée pour correspondre à une partie arrière (2R) du composant de base (2), dans lequel ladite au moins une deuxième tige mobile supplémentaire (16c") comprend une deuxième extrémité proximale (26") sensiblement en forme d'épingle (28), de façon à réaliser, pendant l'utilisation, au moins un siège (24b) au niveau de la partie arrière (2R) de la surface inférieure (2b) du composant de base (2).

6. Moule (10) selon la revendication précédente, dans lequel ladite épingle (28) est étendue à partir d'un corps central de la au moins une deuxième extrémité proximale (26") vers une extrémité dudit moule (10) opposée à celle dans laquelle ladite au moins une première tige mobile supplémentaire (16c') est positionnée.

7. Moule (10) selon l'une quelconque des revendications précédentes, dans lequel lesdites extrémités proximales (26, 26', 26") formées permettent de déterminer lesdites découpes et/ou lesdits trous et/ou ledit siège (24c) et ledit siège (24b) dans ledit composant de base (2) et/ou dans sa surface inférieure (2b), par exemple adaptés pour déterminer le raccordement avec une fourche (5) d'une selle (1).

8. Moule (10) selon l'une quelconque des revendications précédentes, dans lequel au moins une desdites tiges mobiles supplémentaires (16c) et/ou ladite première tige mobile supplémentaire (16c') et ladite au moins une deuxième tige mobile supplémentaire (16c") est/sont déplacée(s) vers le haut pendant l'utilisation le long d'une direction inclinée vers l'intérieur dudit moule (10) par rapport à la direction verticale le long de laquelle lesdites tiges mobiles (16b) sont étendues et/ou inclinées par rapport au plan sur lequel ledit moule (10) repose.

9. Moule (10) selon l'une quelconque des revendications précédentes, dans lequel lesdites extrémité proximales (26) formées desdites tiges mobiles supplémentaires (16c) sont pivotées ou articulées ou maintenues, par un moyen d'articulation ou d'épingle, ou un moyen de maintien ou un moyen de bille (29), sur les tiges mobiles supplémentaires (16c) respectives, in à telle façon pour être adaptées de modifier l'inclinaison desdites extrémités proximales (26) et/ou dans lequel lesdites extrémité proximales (26) formées desdites tiges mobiles supplémentaires (16c) comprennent des moyens rétractables, comme une patte (27) et/ou une épingle (28) rétractables, adaptés pendant l'utilisation pour rétracter ladite patte (27) et/ou ladite épingle (28) à l'intérieur desdites tiges mobiles supplémentaires (16c) respectives, pour libérer, pendant l'utilisation, les éventuels découpes et/ou trous moulés dans le composant de base (2).

10. Moule (10) selon l'une quelconque des revendications précédentes, dans lequel ladite partie inférieure (12) présente, pendant l'utilisation, une face supérieure (12a) et une face inférieure (12b), la face inférieure (12b) étant sensiblement parallèle au plan dans lequel ledit moule (10) repose, dans lequel ladite face supérieure (12a), opposée et sensiblement parallèle à la face inférieure (12b), est orientée vers l'intérieur du moule (10) et présente une zone en relief qui détermine une paroi inférieure (30a) de ladite cavité (30), adaptée pendant l'utilisation pour mouler une surface inférieure (2b) du composant de base (2) .

11. Moule (10) selon l'une quelconque des revendications précédentes quand elle dépend de la revendication 5 et de la revendication 11, dans lequel ladite paroi inférieure (30a) de la cavité (30) est affectée, dans des zones spécifiques, par les extrémités proximales (26) formées desdites tiges mobiles supplémentaires (16c).

12. Moule (10) selon l'une quelconque des revendications précédentes, dans lequel ladite partie supérieure (14) présente, pendant l'utilisation, une surface extérieure (14a) et une surface intérieure (14b), la surface extérieure (14a) étant sensiblement parallèle au plan dans lequel ledit moule (10) repose, dans lequel ladite surface intérieure (14b), opposée et sensiblement parallèle à la surface extérieure (14a), est orientée vers l'intérieur du moule (10) et comporte une zone creusée qui détermine une paroi supérieure (30b) de ladite cavité (30), adaptée pendant l'utilisation pour mouler une surface supérieure (2a) du composant de base (2) et/ou dans lequel ladite partie supérieure (14) présente un moyen d'épingle (14c) adapté pour être engagé, de manière réversible et/ou coulissante, avec ladite partie inférieure (12) du moule (10), en particulier avec des moyens de siège (12c) de ladite partie inférieure (12) adaptés pour contenir ledit moyen d'épingle (14c).

13. Moule (10) selon l'une quelconque des revendications précédentes, comprenant une unité d'insertion (18) pour une matière dudit composant de base (2), dans lequel ladite unité d'insertion (18) comprend un trou (18a), capable de placer ladite cavité (30) en communication fluidique avec un système d'insertion de type connu, et/ou dans lequel ladite partie inférieure (12) comprend un canal pilote (18b), placé au niveau dudit trou (18a), capable pendant l'utilisation de transporter la matière à l'état fluide ou liquide en provenance du système d'insertion et qui constitue, pendant l'utilisation, ledit composant de base (2).

14. Moule (10) selon l'une quelconque des revendications précédentes, comprenant une plate-forme de support (20), constituée par une base de support (20a) et, éventuellement, par des parois de support (20b), dans lequel ladite plate-forme de support (20) est placée en dessous de ladite partie inférieure (12) et/ou dans lequel ladite plate-forme de support (20) contient au moins partiellement ledit système d'extraction (16).

15. Procédé pour fabriquer un composant de base (2) d'un élément de support pour le corps humain, comme par exemple une selle pour des véhicules, par ex. pour des bicyclettes ou des motocyclettes, un siège, un manche, une poignée, un accoudoir, un dossier, un appuie-tête, un équipement pour le sport ou les loisirs, comprenant les étapes suivantes:
fourniture d'un moule (10) selon l'une quelconque des revendications 1 à 14 comprenant une partie inférieure (12) et une cavité (30),
application d'un agent de démoulage sur la surface de la cavité (30) du moule (10),
injection, pulvérisation ou insertion de la matière adaptée pour fabriquer le composant de base (2) dans la cavité (30) dudit moule (10), solidification de ladite matière,
déplacement, vers le haut dans la direction verticale, d'une ou de plusieurs tiges mobiles (16b) afin de soulever et/ou détacher le composant de base (2) moulé de ladite partie inférieure (12) dudit moule (10),
déplacement vers le haut d'une ou de plusieurs tiges mobiles supplémentaires (16c), chacune dotée d'une extrémité proximale (26) formée, lesdites extrémités proximales (26) formées déterminant ou définissant au moins une partie d'une paroi inférieure (30a) de la cavité (30) et des découpes et/ou trous éventuels dans la surface inférieure (2b) du composant de base (2),
dans lequel afin de libérer ledit composant de base (2) des découpes et/ou trous éventuels, au moins l'une des étapes suivantes survient:
déplacement d'au moins une première tige mobile supplémentaire (16c) et/ou d'une première tige mobile supplémentaire (16c') vers le haut dans une direction inclinée vers l'intérieur du moule et/ou vers au moins l'une desdites tiges mobiles (16b) et/ou
rotation de ladite extrémité proximale (26) formée desdites tiges mobiles supplémentaires (16c), grâce à des moyens d'articulation ou d'épingle, ou des moyens de maintien ou des moyens de bille (29), et/ou
rétractation d'une patte (27) et/ou d'une épingle (28) desdites extrémités proximales (26) formées à l'intérieur desdites tiges mobiles supplémentaires (16c).
